# EUROPÄISCHE PATENTANMELDUNG

(11) **EP 2 080 547 A1**
(43) Veröffentlichungstag der Anmeldung: **22.07.2009**
(21) Anmeldenummer: 08000803.0
(22) Anmeldetag: 17.01.2008
(51) Int. Cl.: B01D 46/04

(54) **Verfahren und Vorrichtung zur Reinigung von horizontal eingebauten schlauch- oder taschenförmigen Filterelementen**

(71) Anmelder: Reining, Christian, 48163 Münster (DE)
(72) Erfinder: Reining, Christian, 48163 Münster (DE)
(74) Vertreter: Kayser, Christoph

(57) **Zusammenfassung**

Ein Verfahren zur Reinigung von horizontal eingebauten schlauch- oder taschenförmigen Filterelementen mit schmalem Öffnungsquerschnitt, bei welchem ein Filterelement zeitweise mit hoch frequenten Pulsationsstößen beaufschlagt wird, die das Filterelement in Schwingung versetzen, wird vor der Auslösung der Pulsationsstöße mit anstehender Spülluft aufgeblasen und während der Pulsationsstöße mit dieser durchspült, und eine Reinigungsvorrichtung, mit einem Reinigungskopf, einer Druckmittelversorgung und mit einer Steuereinrichtung zur Steuerung des Reinigungskopfes und der Druckmittelversorgung, ist mit einer Spülmittelversorgung versehen, die direkt an dem Reinigungskopf angeschlossen ist.

## Beschreibung

Die vorliegende Erfindung betrifft ein Verfahren zur Reinigung von horizontal eingebauten schlauch- oder taschenförmigen Filterelementen mit schmalem Öffnungsquerschnitt, bei welchem ein Filterelement zeitweise mit hoch frequenten Pulsationsstößen beaufschlagt wird, die das Filterelement in Schwingung versetzen.

Die Erfindung betrifft auch eine Reinigungsvorrichtung, mit einem Reinigungskopf, einer Druckmittelversorgung und mit einer Steuereinrichtung zur Steuerung des Reinigungskopfes und der Druckmittelversorgung zur Durchführung eines vorgenannten Verfahrens.

Es sind Reinigungsverfahren und Reinigungsvorrichtungen bekannt, mit denen schlauch- oder taschenförmige Filterelemente mit schmalem Öffnungsquerschnitt durch Pulsationsstöße abgereinigt werden. Bei solchen Verfahren und Vorrichtungen erzeugt eine Druckmittelversorgung Pulsationsstöße in hochfrequenter Weise, mit denen die Filterschläuche oder -Taschen "ausgeklopft" werden. Das auf diese Weise von dem Filterelement abgelöste Filtrat wird anschließend aus dem Filterschlauch bzw. aus der Filtertasche herausgeblasen oder in anderer Weise aus diesen abgesammelt.

Bei horizontal eingebauten schlauch- oder taschenförmigen Filterelementen mit schmalem Öffnungsquerschnitt ist diese Vorgehensweise ungeeignet. Mit Hilfe der Pulsationsstöße lassen sich zwar die Verunreinigungen von den Filterelementen abklopfen, die Beseitigung des losen Filtrats aus den Filterschläuchen und Filtertaschen ist allerdings ausgesprochen schwierig. Es ist daher im Stand der Technik häufig erforderlich, die Filterschläuche und Filtertaschen mit schmalem Öffnungsquerschnitt auszubauen, um diese in befriedigender Weise abzureinigen, bzw. die gelösten Verunreinigungen zu entfernen.

Häufig sind solche flachen schlauch- oder taschenförmigen Filterelemente in Reihen neben- und übereinander angeordnet, so dass selbst der Ausbau zu Reinigungszwecken umständlich ist. Je nach Anwendung bedarf es zudem einer sehr häufigen Reinigung, so dass das Ein- und Ausbauen solcher in Reihe über- und untereinander angeordneter schlauch- oder taschenförmiger Filterelemente eine große Zeitbelastung darstellt, denn während der Reinigung kann die in Verbindung mit solchen Filterelementen stehende Anlage nicht betrieben werden.

Es wird daher angestrebt, eine Reinigung solcher horizontal eingebauten schlauch- oder taschenförmigen Filterelemente mit schmalem Öffnungsquerschnitt im eingebauten Zustand durchführen zu können. Dies ist aufgrund des schlechten Zugangs zum Inneren der Filterelemente bisher nicht in zufriedenstellender Weise möglich.

Die Aufgabe der vorliegenden Erfindung ist daher, ein Verfahren und eine Vorrichtung zu schaffen, mit dem/der die Reinigung im eingebauten Zustand von schlauch- oder taschenförmigen Filterelementen mit schmalem Öffnungsquerschnitt ohne Weiteres auf zufriedenstellende Weise und zeitsparend durchgeführt werden kann.

Die Aufgabe wird erfindungsgemäß dadurch gelöst, dass das Filterelement vor der Auslösung der Pulsationsstöße mit anstehender Spülluft aufgeblasen und während der Pulsationsstöße mit dieser durchspült wird.

Die Aufgabe wird zudem auch durch die Reinigungsvorrichtung nach Anspruch 7 gelöst, bei der eine Spülversorgung vorgesehen ist, die direkt an den Reinigungskopf angeschlossen ist. Mit dem erfindungsgemäßen Verfahren und der erfindungsgemäßen Vorrichtung ist es möglich, horizontal eingebaute schlauch- oder taschenförmige Filterelemente mit schmalem Öffnungsquerschnitt im eingebauten Zustand effektiv zu reinigen. Durch das Aufblasen des Filterelements mit anstehender Spülluft wird das von dem Filterelement umschlossene Volumen vergrößert und der Zugang zu dessen Innerem erleichtert. Das durch die Pulsationsstöße gelöste Filtrat kann über die im aufgeblasenen Zustand größere Öffnung leicht ausgeblasen werden.

Zur Durchführung des Verfahrens wird der Reinigungskopf der Reinigungsvorrichtung, an dem die Spülmittelversorgung angeschlossen ist, fest an dem Öffnungsquerschnitt angebracht.

Ein weiterer Vorteil der vorliegenden Erfindung ist, dass die anstehende Spülluft während der Pulsationsstöße kontinuierlich bereitgestellt wird und diese das Filterelement im aufgeblasenen Zustand hält.

Durch das kontinuierliche Aufblasen des Filterelements mit anstehender Spülluft wird einerseits das Entfernen des gelockerten Filtrats erleichtert und werden andererseits die benachbarten Filterelemente, wenn diese in Reihe nebeneinander und übereinander angeordnet sind, bereits durch die Pulsationsstöße stärker beansprucht. Dadurch erfolgt schon bei der Reinigung eines Filterelements gleichzeitig auch eine Lösung von Filtratmaterial in benachbarten Filterelementen. Wenn dann das benachbarte Filterelement an der Reihe ist, hat sich die Ausgangslage für den Reinigungsvorgang in diesem benachbarten Filterelement aufgrund des vorhergehenden Reinigungsvorgangs an dem vorhergehenden Filterelement günstig entwickelt.

Ein weiterer Vorteil gemäß vorliegender Erfindung ist, dass die Pulsationsstöße zeitabhängig gesteuert werden. In eine zeitabhängige Steuerung können Erfahrungswerte über einzelne Anlagen einfließen, die deren üblichem Verschmutzungsgrad entsprechen.

Alternativ kann es von Vorteil sein, dass die Pulsationsstöße in Abhängigkeit von einer Druckdifferenz gesteuert werden. Mit der Feststellung des Differenzdrucks zwischen einem sauberen Filterelement und einem verunreinigten Filterelement lässt sich der Grad der Verunreinigung feststellen und die Häufigkeit und Intensität der Pulsationsstöße einstellen.

Ein weiterer Vorteil gemäß vorliegender Erfindung ist, dass die Spülluft mit einem Volumenstrom von 7000 l/min gesteuert wird. Es hat sich gezeigt, dass ein solcher Volumenstrom für das Aufblasen des Filterelements und den gesamten Reinigungsvorgang günstig ist.

Ein weiterer Vorteil gemäß vorliegender Erfindung ist, dass drei Pulsationsstöße à 300 ms Ventilöffnungszeit mit einer Unterbrechung von 10 ms gesteuert werden. Mit einer solchen Frequenz haben sich optimale Reinigungsergebnisse gezeigt.

Die optimale Reinigungswirkung ergibt sich aus der Kombination einer hoch frequenten Schwingung und der Durchspülung des Filterelements mit anstehender Spülluft, wodurch sich Oberflächen- und Tiefenstaub schonend entfernen lässt.

Ein weiterer Vorteil gemäß vorliegender Erfindung ist, dass die Reinigungsvorrichtung eine Steuereinrichtung aufweist, die einen kontinuierlichen Volumenstrom aus der Spülmittelversorgung in ein Filterelement steuert, wenn der Reinigungskopf fest an einem schmalen Öffnungsquerschnitt des Filterelements angebracht ist. Dadurch kann ein horizontal eingebautes schlauch- oder flächenförmiges Filterelement mit schmalem Öffnungsquerschnitt online gereinigt werden.

Eine Ausführungsform der vorliegenden Erfindung wird im Folgenden anhand der Zeichnungen näher beschrieben. Es zeigen:
Fig. 1 eine schematische Ansicht eines horizontal eingebauten schlauch- oder flächenförmigen Filterelements mit schmalem Öffnungsquerschnitt und angebrachtem Reinigungskopf; und
Fig. 4 eine schematische Ansicht einer Befestigungseinrichtung für den Reinigungskopf.

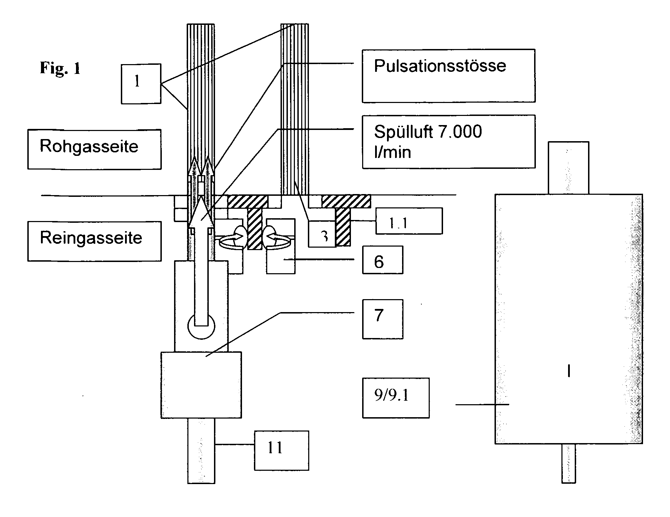

In Fig. 1 ist schematisch ein horizontal eingebautes schlauch- oder taschenförmiges Filterelement 1 mit schmalem Öffnungsquerschnitt 3 dargestellt. Solche taschenförmigen oder schlauchförmigen Filterelemente 1 sind in einer Entstaubungsanlage in einer Reihe nebeneinander oder übereinander angeordnet. Zur Durchführung eines Reinigungsvorganges wird von einer Reingasseite aus eine Reinigungsvorrichtung 5 eingesetzt. Die Reinigungsvorrichtung 5 ist eine übliche Reinigungsvorrichtung, die über ein Ventil (nicht dargestellt) hochfrequente Pulsationsstöße auslösen kann. Mit den hochfrequenten Pulsationsstößen wird ein zu reinigendes Filterelement 1 in eine hochfrequente Schwingung versetzt, so dass darin festsitzender Oberflächen- und Tiefenstaub gelöst wird.

Die Reinigungsvorrichtung 5 umfasst einen Reinigungskopf 7, der zum Zwecke der Reinigung bzw. während eines Reinigungsvorgangs fest an dem Öffnungsquerschnitt 3 angebracht ist. Die Fixierung des Reinigungskopfes 7 erfolgt mittels einer Befestigungseinrichtung 6, z. B. mit einem Klauengreifer. An dem Reinigungskopf 7 ist eine Druckmittelversorgung 9 angeschlossen, die über ein Ventil (nicht dargestellt) einen Druck von 9 bis 10 bar bereitstellt. Es erfolgen über eine Steuereinrichtung (nicht dargestellt) drei Pulsationsstöße in 300 ms, mit einer Unterbrechung von 10 ms, unabhängig von der Ventilöffnungszeit. Diese Prozedur wird dreimal wiederholt.

An dem Reinigungskopf 7 ist auch eine Spülmittelversorgung 11 angeschlossen. Als Spülmittel wird Luft verwendet, wobei auch andere gasförmige Medien als Spülmittel geeignet sein können. Die Steuereinrichtung (nicht dargestellt) schaltet vor einem Reinigungsvorgang die Spülmittelversorgung 11 ein, so dass das Filterelement 1, an welchem der Reinigungskopf 7 fest angebracht ist, mit anstehender Spülluft aufgeblasen wird. Mit dem Begriff "aufgeblasen" ist hier gemeint, dass in dem Filterelement 1 ein Überdruck erzeugt wird, der zur Aufweitung des im Normalbetrieb schmalen Filterelements 1 bzw. des schmalen Querschnitts desselben führt. Die Spülmittelversorgung 11 bleibt auch während des nachfolgenden Reinigungsvorgangs, das heißt, während der Einleitung der Pulsationsstöße in das Filterelement 1 in Betrieb. Dadurch wird gewährleistet, dass das Filterelement 1 auch während des Reinigungsvorgangs mit anstehender Spülluft durchspült wird, wodurch festsitzender Oberflächen- und Tiefenstaub schonend entfernt wird. In der vorliegenden Ausführungsform wird das Filterelement 1 während des Reinigungsvorganges kontinuierlich mit anstehender Spülluft durchspült. In anderen Ausführungsformen kann dies auch diskontinuierlich erfolgen.

Das Aufblasen eines Filterelements 1 mit Spülluft beeinflusst die seitlich neben dem Filterelement 1 liegenden Filterelemente, indem sie deren Seitenwände nach innen beulen. Die Wirkung der Pulsationsstöße in dem Filterelement 1 haben somit bereits auch eine Wirkung auf die seitlich benachbarten Filterelemente. Auf diese Weise wird auch der Reinigungsvorgang des jeweils benachbarten Filterelements beschleunigt, da bereits eine Lockerung des festsitzenden Oberflächen- und Tiefenstaubs in dem jeweils benachbarten Filterelement durch die vorhergehende Reinigung des Filterelements 1 erfolgt ist.

Die Spülluft durchspült das Filterelement 1 in der vorliegenden Ausführungsform mit einem Volumenstrom von ca. 7000 l/min. Je nach Material des Filterelements 1 und nach Verschmutzungsart und Verschmutzungsgrad können auch andere Volumenströme verwendet werden. Der Pulsationsdruck wird über eine Wartungseinheit (nicht dargestellt) direkt in einen Druckkessel 9.1 geleitet. Durch Betätigen eines Auslösers (nicht dargestellt) wird ein Magnetventil (nicht dargestellt) ausgelöst, welches dann ein im Druckkessel 9.1 zur Verfügung stehendes Volumen mit zeitlich festgelegten hochfrequenten Pulsationsstößen freigibt. Dies ist an sich bekannt und nicht Gegenstand der vorliegenden Erfindung.

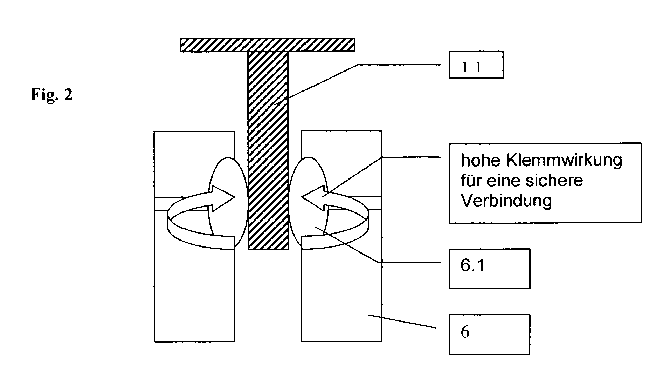

In Fig. 2 ist die Befestigungseinrichtung 6 schematisch dargestellt. Die Entstaubungsanlage weist einen Halteabschnitt 1.1 auf, der in der vorliegenden Ausführungsform zwischen zwei benachbarten Filterelementen 1 angeordnet sind. Die Befestigungseinrichtung 6 stellt die Verbindung zwischen der Reinigungsvorrichtung und einer Entstaubungsanlage (Filterelement 1) her. Eine sichere Verbindung wird über die Art der Wirkpaarung und die Anzahl der Kraftebenen hergestellt. Beim Einsatz einer Kraftpaarung wird der Halt durch das Ausüben eines Druckes auf die Kontaktfläche der Entstaubungsanlage erzeugt.

In Fig. 1 befindet sich der Halteabschnitt 1.1 zwischen zwei benachbarten Filterelementen 1. In der vorliegenden Ausführungsform kann mit Hilfe z. B. eines Exzenters 6.1 mit geringem Kraftaufwand eine sehr hohe Klemmwirkung (ca. 500 kg) erzielt werden.

### Bezugszeichenliste

- 1: Filterelement
- 1.1: Halteabschnitt
- 3: Öffnungsquerschnitt
- 5: Reinigungsvorrichtung
- 6: Befestigungseinrichtung
- 6.1: Exzenter
- 7: Reinigungskopf
- 9: Druckmittelversorgung
- 9.1: Druckkessel
- 11: Spülmittelversorgung

## Patentansprüche

1. Verfahren zur Reinigung von horizontal eingebauten schlauch- oder taschenförmigen Filterelementen mit schmalem Öffnungsquerschnitt, bei welchem ein Filterelement zeitweise mit hoch frequenten Pulsationsstößen beaufschlagt wird, die das Filterelement in Schwingung versetzen,
**dadurch gekennzeichnet,**
**dass** das Filterelement vor der Auslösung der Pulsationsstöße mit anstehender Spülluft aufgeblasen und während der Pulsationsstöße mit dieser durchspült wird.

2. Verfahren nach Anspruch 1,
**dadurch gekennzeichnet,**
**dass** die anstehende Spülluft während der Pulsationsstöße kontinuierlich bereitgestellt wird und das Filterelement im aufgeblasenen Zustand hält.

3. Verfahren nach Anspruch 1 oder 2,
**dadurch gekennzeichnet,**
**dass** die Pulsationsstöße zeitabhängig gesteuert werden.

4. Verfahren nach Anspruch 1 oder 2,
**dadurch gekennzeichnet,**
**dass** die Pulsationsstöße in Abhängigkeit vom Differenzdruck gesteuert werden.

5. Verfahren nach einem der vorstehenden Ansprüche,
**dadurch gekennzeichnet,**
**dass** die Spülluft mit einem Volumenstrom von 7000 l/min gesteuert wird.

6. Verfahren nach einem der vorstehenden Ansprüche,
**dadurch gekennzeichnet,**
**dass** drei Pulsationsstöße in 300 ms gesteuert werden.

7. Verfahren nach einem der vorstehenden Ansprüche,
**dadurch gekennzeichnet,**
**dass** zwischen jedem Pulsationsstoß eine Unterbrechung von 10 ms gesteuert wird.

8. Reinigungsvorrichtung, mit einem Reinigungskopf, einer Druckmittelversorgung und mit einer Steuereinrichtung zur Steuerung des Reinigungskopfes und der Druckmittelversorgung,
**dadurch gekennzeichnet,**
**dass** eine Spülmittelversorgung (11) vorgesehen ist, die direkt an dem Reinigungskopf (7) angeschlossen ist.

9. Reinigungsvorrichtung nach Anspruch 8,
**dadurch gekennzeichnet,**
**dass** die Steuereinrichtung einen kontinuierlichen Volumenstrom aus der Spülmittelversorgung (11) in ein Filterelement (1) steuert, wenn der Reinigungskopf (7) fest an einem schmalen Öffnungsquerschnitt (3) des Filterelements (1) angebracht ist.

10. Reinigungsvorrichtung nach einem der Ansprüche 8 oder 9,
**dadurch gekennzeichnet,**
**dass** der Reinigungskopf (7) mittels eines Klemmgreifer (6) an dem Filterelement (1) festlegbar ist.

11. Reinigungsvorrichtung nach Anspruch 10,
**dadurch gekennzeichnet,**
**dass** zwischen zwei benachbarten Filterelementen (1) ein Halteabschnitt (1.1) angeordnet ist, an dem der Klemmgreifer (6) angesetzt werden kann.

12. Reinigungsvorrichtung nach Anspruch 10 oder 11,
**dadurch gekennzeichnet,**
**dass** der Klemmgreifer (6) einen Exzenter (6.1) zur Erzielung einer hohen Klemmwirkung aufweist.

## Geänderte Patentansprüche

### Geänderte Patentansprüche gemäss Regel 137(2) EPÜ.

**1.** Verfahren zur Reinigung von horizontal eingebauten schlauch- oder taschenförmigen Filterelementen mit schmalem Öffnungsquerschnitt, bei welchem ein Filterelement zeitweise mit hoch frequenten Pulsationsstößen beaufschlagt wird, die das Filterelement in Schwingung versetzen,
**dadurch gekennzeichnet,**
**dass** das Filterelement vor der Auslösung der Pulsationsstöße mit anstehender Spülluft aufgeblasen, so dass in dem Filterelement ein Überdruck entsteht, und das Filterelement während der Pulsationsstöße mit dieser durchspült wird.

**2.** Verfahren nach Anspruch 1,
**dadurch gekennzeichnet,**
**dass** die anstehende Spülluft während eines Reinigungsvorganges kontinuierlich bereitgestellt wird und das Filterelement im aufgeblasenen Zustand hält.

**3.** Verfahren nach Anspruch 1,
**dadurch gekennzeichnet,**
**dass** die anstehende Spülluft während eines Reinigungsvorganges diskontinuierlich bereitgestellt wird.

**4.** Verfahren nach einem der Ansprüche 1 bis 3,
**dadurch gekennzeichnet,**
**dass** die Pulsationsstöße zeitabhängig gesteuert werden.

**5.** Verfahren nach einem der Ansprüche 1 bis 3,
**dadurch gekennzeichnet,**
**dass** die Pulsationsstöße in Abhängigkeit vom Differenzdruck gesteuert werden.

**6.** Verfahren nach einem der vorstehenden Ansprüche,
**dadurch gekennzeichnet,**
**dass** die Spülluft mit einem Volumenstrom von 7000 I/min gesteuert wird.

**7.** Verfahren nach einem der vorstehenden Ansprüche,
**dadurch gekennzeichnet,**
**dass** drei Pulsationsstöße in 300 ms gesteuert werden.

**8.** Verfahren nach einem der vorstehenden Ansprüche,
**dadurch gekennzeichnet,**
**dass** zwischen jedem Pulsationsstoß eine Unterbrechung von 10 ms gesteuert wird.

**9.** Reinigungsvorrichtung, mit einem Reinigungskopf (7), einer Druckmittelversorgung (9) und mit einer Steuereinrichtung zur Steuerung des Reinigungskopfes (7), der Druckmittelversorgung (9) und einer Spülmittelversorgung (11),
**dadurch gekennzeichnet,**
**dass** eine Spülmittelversorgung (11) direkt an den Reinigungskopf (7) angeschlossen ist und die Steuereinrichtung einen Volumenstrom aus der Spülmittelversorgung (11) in ein Filterelement (1) steuert, wenn der Reinigungskopf (7) fest an einem schmalen Öffnungsquerschnitt (3) des Filterelements (1) angebracht ist und während der Abgabe von Pulsationsstößen.

**10.** Reinigungsvorrichtung nach Anspruch 9,
**dadurch gekennzeichnet,**
**dass** die Steuereinrichtung einen kontinuierlichen Volumenstrom aus der Spülmittelversorgung (11) in ein Filterelement (1) steuert.

**11.** Reinigungsvorrichtung nach Anspruch 9,
**dadurch gekennzeichnet,**
**dass** die Steuereinrichtung einen diskontinuierlichen Volumenstrom aus der Spülmittelversorgung (11) in ein Filterelement (1) steuert.

**12.** Reinigungsvorrichtung nach einem der Ansprüche 9 bis 11,
**dadurch gekennzeichnet,**
**dass** der Reinigungskopf (7) mittels eines Klemmgreifers (6) an dem Filterelement (1) festlegbar ist.

**13.** Reinigungsvorrichtung nach Anspruch 12,
**dadurch gekennzeichnet,**
**dass** zwischen zwei benachbarten Filterelementen (1) ein Halteabschnitt (1.1) angeordnet ist, an dem der Klemmgreifer (6) angesetzt werden kann.

**14.** Reinigungsvorrichtung nach Anspruch 12 oder 13,
**dadurch gekennzeichnet,**
**dass** der Klemmgreifer (6) einen Exzenter (6.1) zur Erzielung einer hohen Klemmwirkung aufweist.
